# EUROPEAN PATENT APPLICATION

(11) **EP 4 641 599 A1**
(43) Date of publication of application: **29.10.2025**
(21) Application number: 23906157.5
(22) Date of filing: 13.12.2023
(51) Int. Cl.: H01G 11/26, H01G 11/20

(54) **DIAMOND-BASED SUPERCAPACITOR AND ITS MANUFACTURING METHOD**

(30) Priority: 19.12.2022 ES 202231077
(71) Applicant: Universidad de Cádiz, 11003 Cádiz (ES)
(72) Inventor: ARAUJO GAY, Daniel, 11510 Puerto Real (Cádiz) (ES); PERNOT, Julien, 38042 Grenoble (Francia) (FR); VILLAR CASTRO, Pilar, 11519 Puerto Real (Cádiz) (ES); LLORET VIEIRA, Fernando Manuel, 11519 Puerto Real (Cádiz) (ES); EON, David, 38042 Grenoble (FR)
(74) Representative: Herrero & Asociados, S.L.
(86) International application number: PCT/ES2023/070745
(87) International publication number: WO 2024/133993

(57) **Abstract**

Diamond supercapacitor and manufacturing method thereof.

The invention includes the design and manufacturing method of the device, which is based on the concatenation of p-type and n-type doped diamond layers in a bevel structure.

The design makes the number of layers relevant to the stored charge capacity and the thickness of the layers can be very small. The thickness of the n-layer determines at what voltages the battery should be charged.

The invention provides a very robust and lightweight supercapacitor with very short charging and discharging times.

## Description

### TECHNICAL SECTOR

Industrial sector: Energy.

### BACKGROUND OF THE INVENTION

Through energy-generating industries, the transport system utilizes a large portion of the world's energy resources. It is therefore co-responsible for environmental pollutants caused by the combustion of fossil fuels (namely, gasoline, diesel, and ethanol) [1]. A global transformation of the transport system for environmental protection, energy conservation, and low-carbon efficiency will require significant improvements in the on-board energy production process and its efficient consumption [2-4]. This technological transformation requires the systematic development of fuel- and energy-efficient technologies in the transport sector.

The conventional transport system employs a propulsion system based on an internal combustion engine (ICE), which uses petroleum products for propulsion. It is estimated that, at the current rate of consumption, the world's current petroleum resources will be depleted within the next 50 years [4]. There has also been growing concern about environmental pollution and subsequent climate change. For example, in the United States of America (USA), the conventional transport system accounts for 30% of total greenhouse gas (GHG) emissions, causing significant global warming [3]. Furthermore, the world's population is expected to grow from the current 6 billion to around 10 billion over the next 50 years, while the number of vehicles in operation will increase from 700 million to 2.5 billion [4]. With the projected growth of small cars and their associated CO₂ emissions, the importance of addressing fuel efficiency in road transport is significantly important in the global agendas on environment, energy and climate change. The road transport system is responsible for approximately 20% of global CO₂ emissions from the burning of fossil fuels, and in most countries, CO₂ emissions due to transport are growing at a faster rate than total CO₂ emissions [2, 3]. Projections for the growth of road transport and car ownership for the coming decades show that road transport will continue to dominate, despite rapid growth in shipping and aviation sectors.

Stabilizing and reducing greenhouse gas and CO₂ emissions requires significant improvements to save fuel and reduce exhaust pipe emissions in the road transport sector.

To face this challenge, new concepts and innovations are being infused to make transport systems increasingly energy-efficient, reliable, and safe, with zero or reduced emissions at an affordable cost. These novel concepts and innovations can be seen in the use of low-carbon fuels such as bioethanol or biodiesel, the replacement of petroleum energy with electric energy to power vehicles, or the generation of hydrogen-based energy. [4] Most of these innovations are based solely on the electrification of conventional vehicle technology and are grouped under the umbrella of electric vehicle technology (EVT). In EVT, ICE-based propulsion systems are being replaced, either partially or fully, by an electric propulsion system (EPS) to minimize fuel consumption and exhaust pipe emissions.

Battery electric vehicles (BEVs) are primarily a combination of an energy storage system (ESS) and an electric propulsion unit, which together provide the power to drive the wheels. Limited operating range, comparatively low efficiency, and storage system limitations are the main concerns with BEVs. Over the past decade, BEVs have accelerated their popularity globally as competitors and sustainable alternatives to conventional ICE-based vehicles. Significant efforts and resources are being directed toward meeting market expectations for high-performance, energy-efficient, durable, safe, and affordable electric vehicles [5]. The technological development and growth of EVT has accelerated along its path to overcome the aforementioned problems associated with each of the electric vehicles. Therefore, the dream of having commercially viable electric vehicles is becoming a reality. Electric vehicles are being commercialized and gradually capturing the important market space [5-13].

Electrochemical energy storage (EES) systems in terms of electrochemical capacitors (ECs) and batteries have shown great potential in powering portable electronic devices and electrifying the transport sector due to their advantageous features of high roundtrip efficiency, long life cycles, and great potential to be implemented with different chemistries based on cheap, sustainable, and recyclable materials, and low maintenance cost. [14-16] Generally, electrical energy is stored in EES in two ways: directly through a non-faradaic process or indirectly through a faradaic process. [17] Non-faradaic technologies store electricity directly electrostatically. Typically, electric double-layer capacitors (EDLCs) are very efficient (≈100%) and suitable for power management (e.g. frequency regulation), but provide low energy density with limited discharge time. [18] Alternatively, electrical energy can be stored by converting it into chemical energy, requiring faradaic oxidation and reduction of electrochemically active reactants, and reversibly releasing the energy when required. Typical examples of faradaic systems include pseudocapacitors and various batteries.

The key challenge is the identification of ideal electrode materials that satisfy the requirements of high energy/power density and long cycle time [19]. Strategies such as particle size reduction [20, 21], morphology control [22], and hybrid material production [16] have been proposed. These novel electrode materials narrow the gap in electrochemical behavior between ECs and batteries, mainly due to the popular trend of increasing the mutual penetration of nanostructured materials (combining the high energy density of batteries with the high power density of capacitors).

Lithium-ion batteries exhibit sufficient energy density to compete with combustion engines, but they have a clear lack of power (y-axis), making it necessary to combine them with supercapacitors to increase the power delivered. Furthermore, both lose their charge relatively quickly, making it necessary to recharge them frequently. This is a limitation not only for high-power applications such as ICE but also for household applications such as laptops, cordless lighting, vacuum cleaners, drills, etc. Indeed, for many of these devices, charging and discharging time is an important factor, and in this regard, the present patent is also outstanding.

### References

[1] D. Streimikiene, T. Baležentis, L. Baležentien, Comparative assessment of road transport technologies, Renew. Sustain. Energy Rev. 20 (2013) 611-618.
[2] Mobility 2030: "Meeting the Challenges of Sustainability", World Business Council for Sustainable Development (WBCSD) July 2004a and 2004b.
[3] International Energy Agency, Global EV outlook: Understanding the electric vehicle landscape to 2020. [Online]. Available: https://www.iea.org/publications/freepublications/publication/ GlobalEVOutlook_2013.pdf, 2013.
[4] C.C. Chan, Y.S. Wong, Electric vehicles charge forward, IEEE Power Energy Mag. 2 (6) (2004) 24-33.
[5] A. Emadi, Transportation 2.0, IEEE Power Energy Mag. 9 (4) (2011) 18-29.
[6] Lalit Kumar, S. Jain, Development of Power Electronic Interface for Electric Propulsion System, PhD Dissertation, MANIT, Bhopal, India, 2016.
[7] S.S. Williamson, A. Emadi, Comparative assessment of hybrid electric and fuel cell vehicles based on comprehensive well-to-wheels efficiency analysis, IEEE Trans. Veh. Technol. 54 (3) (2005) 856-862.
[8] C.C. Chan, The state of the art of electric, hybrid, and fuel cell vehicles, Proc. IEEE 95 (4) (2007) 704-718.
[9] A. Emadi, K. Rajashekara, S.S. Williamson, S.M. Lukic, Topological overview of hybrid electric and fuel cell vehicular power system architectures and configurations, IEEE Trans. Veh. Technol. 54 (3) (2005) 763-770.
[10] K.T. Chau, Y.S. Wong, Overview of power management in hybrid electric vehicle, Energy Convers. Manag. 43 (2002) 1953-1968. Elsevier.
[11] R. Ghorbani, E. Bibeau, S. Filizadeh, On conversion of hybrid electric vehicles to plug-in, IEEE Trans. Veh. Technol. 59 (4) (2010) 2016-2020.
[12] D.P. Tuttle, R. Baldick, The evolution of plug-in electric vehicle-grid interactions, IEEE Trans. Smart Grid 3 (1) (2012) 500-505.
[13] S. Srinivasaraghavan, A. Khaligh, Time management, IEEE Power Energy Mag. 9 (4) (2011) 46-53.
[14] Z. Yang, J. Zhang, M. C. W. Kintner-Meyer, X. Lu, D. Choi, J. P. Lemmon, J. Liu, Chem. Rev. 2011, 111, 3577.
[15] Z. Yang, J. Zhang, M. C. W. Kintner-Meyer, X. Lu, D. Choi, J. P. Lemmon, J. Liu, Chem. Rev. 2011, 111, 3577.
[16] G. L. Soloveichik, Annu. Rev. Chem. Biomol. Eng. 2011, 2, 503
[17] B. E. Conway, Electrochemical Supercapacitors: Scientific Fundamentals and Technological Applications, Springer Science + Business Media, New York 1999
[18] L. L. Zhang, X. S. Zhao, Chem. Soc. Rev. 2009, 38, 2520.
[19] C. Merlet, B. Rotenberg, P. A. Madden, P.-L. Taberna, P. Simon, Y. Gogotsi, M. Salanne, Nat. Mater. 2012, 11, 306.
[20] C. Portet, G. Yushin, Y. Gogotsi, J. Electrochem. Soc. 2008, 155, A531.
[21] S. P. Jahromi, A. Pandikumar, B. T. Goh, Y. S. Lim, W. J. Basirun, H. N. Lim, N. M. Huang, RSC Adv. 2015, 5, 14010.
[22] H. Jiang, T. Zhao, J. Ma, C. Yan, C. Li, Chem. Commun. 2011, 47, 1264.
[23] P. Simon, Y. Gogotsi, B. Dunn, Science 2014, 343, 1210

### EXPLANATION OF THE INVENTION

The present invention involves a method for manufacturing a diamond battery/ supercapacitor based on a multilayer structure doped with nitrogen and boron. Specifically, it involves a method for manufacturing a novel structure formed by repeating epilayers of monocrystalline diamond doped alternately with boron and nitrogen.

Using the proposed method, the different layers of the structure are brought into contact at their ends, forming a beveled structure with a subsequent n-doped homoepitaxial diamond coating, obtained with lateral growth that prevents dielectric breakdown. In this way, the device will act as a battery/supercapacitor.

The method incorporates the steps required to manufacture the device, many of which are novel and have never been used before for these applications.

A second aspect of the invention is the device obtained by the manufacturing method used.

The new generation of batteries aims to achieve a larger area and a smaller distance between plates. This is the motivation for 2D approaches, such as supercapacitors, where the area is very large in a small volume [23].

Here, however, energy storage is maximized, i.e. specific energy is maximized, using a different approach. The geometrical configuration is a multi-layer stack with a minimum distance between the plates. Therefore, the entire volume participates in the surface of the plates and no dead spaces are allowed.

While this same approach can be used for supercapacitors, the total energy that can be stored is limited by the dielectric field breakdown, which is much smaller than for solids and accumulates after a short response time, since ions must move from one electrode to the other in an aqueous material.

However, for the case of supercapacitors, such a layer-on-layer configuration results in the accumulated specific energy (i.e. per unit mass) not depending on the spacing, d, between the metal layers, nor on the area, A, if the breakdown field is reached. In addition, the same energy can always be stored for an independently defined volume.

For supercapacitor applications, ideal materials are those with a very high breakdown field. This makes diamond the ideal candidate.

Diamond is an intrinsic electrical insulator; however, it can be made conductive by using impurities as dopants. Thus, with relatively high doping, diamond can exhibit metallic behavior. This is the case when boron is used in values in the range of 10¹⁹-20²¹ cm⁻³.

A priori, the ideal structure for the capacitor is one formed by p++/intrinsic layers. However, once the p++ layers become polarized, carriers can enter the insulating layer since there are no barriers in the structure.

It is therefore advisable to use a p++/n+/p++ structure such that the n-type doped layer acts as a barrier to carriers within the structure. Thus, the limitation of this configuration is the thickness of the induced depletion layer at the p++/n+ interfaces, which requires a minimum thickness for the n layer in the range of 40 nm (depending on the doping level).

In diamond, the most common n-type dopants are nitrogen and phosphorus. For electronic applications, phosphorus is the most commonly used due to its lower (but still large) ionization energy. However, nitrogen's shorter covalent radius (71 pm versus 111 pm for phosphorus) makes it easier for these impurities to be introduced into the diamond crystal lattice.

**STAGE I:** In order to manufacture the battery, it is therefore necessary to grow several p++/n+ bilayers (in the range of 40) using homoepitaxy MPCVD on an extremely thin (1µm thick) type I monocrystalline diamond substrate. Preferably, the substrate should be as thin as possible to minimize weight. The layers will be grown doped with boron (10¹⁷ cm⁻³ < [B]) and nitrogen ([N] > 10¹⁵ cm⁻³).). The thickness of the n layer determines the voltages at which the battery must be charged. In fact, a voltage must be applied such that the layer is on the verge of dielectric breakdown. With nitrogen doping, the potential barrier that prevents the passage of charges in the n layer will be defined at the time of growth and once the device is encapsulated, this barrier will be permanently fixed, since no light will fall on the semiconductor device.

**STAGE II:** The edges of the grown structure need to be beveled to facilitate vertical contact, increase its area and avoid surface breakdown voltage (increase the gap between contacts). This process is carried out by laser cutting. The cutting angle must be such that the resulting beveling plane corresponds to the crystallographic orientation (111) that will favor subsequent lateral diamond growth.

**STAGE III:** On the beveled plane, the conductive diamond layers, p++, must be marked. This can be done with a laser, using local graphitization on the layer (marking with a dot). Laser graphitization makes the area visible later, once the n layer that will cover the entire device has grown. It will therefore allow the precise selection of the area, size, and depth by optimizing irradiation conditions. The location of the p++ layers for laser marking (a dot) can be performed using an atomic force microscope (AFM) in conduction mode (C-AFM). It is recommended to perform the entire process on a single device (laser and C-AFM) to locate the area of interest by AFM and immediately perform laser graphitization without modifying the position of the sample.

**STAGE IV:** Once the p++ layers are located, they can be contacted, but dielectric breakdown at the diamond surface can occur. To prevent this, the surface must be subjected to passivation. This passivation can be achieved by growing a layer of n-type diamond on top of the structure (this includes the (100) and (111) oriented surfaces), modulating lateral and vertical homoepitaxial growth.

**STAGE V:** Contacts are made across this n-doped layer using local laser graphitization. Pre-marking of the p++ layer facilitates its localization. The metallic contact is then deposited on these graphitized columns. This can be achieved by electrolithography followed by a physical vapor deposition (PVD) process.

**STAGE VI:** Finally, the device must be housed and electrically connected in a high-voltage resistant package similar to that used in high-power electronics.

By applying the described method, a diamond supercapacitor is obtained, composed of a layer of type I monocrystalline diamond, on which several bilayers of p-type and n-type diamond are arranged, doped with boron(10¹⁷ cm⁻³ < [B] < 10²³ cm⁻³) and with nitrogen ([N] ] > 10¹⁵ cm⁻³) which have a beveled outer surface, to facilitate vertical contact, increase its area and avoid surface breakdown voltage, passivated by the growth of a layer of n-type diamond, on which the metallic contacts are located, coinciding with the location of the conductive diamond layers, p++.

This diamond supercapacitor has a beveled outer surface, leaving the faces oriented in the crystallographic direction 111.

A basic characteristic of the diamond supercapacitor object of the invention is that the layer thickness n determines the voltage at which the device should be charged.

### BRIEF DESCRIPTION OF THE DRAWINGS

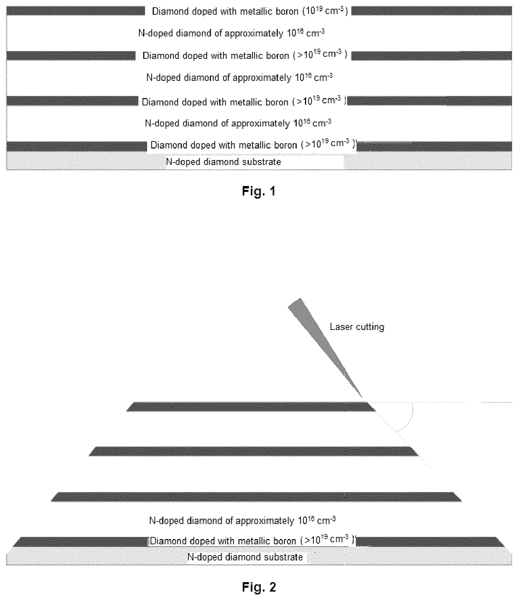

**Figure 1****:** A set of p++/n+ doped layers to be grown on a thin diamond substrate. This corresponds to Stage I of manufacturing.
**Figure 2****:** Laser cutting to bevel the plate edges for more contact and to prevent surface breakdown voltage. The angle must correspond to a surface plane (111) to facilitate new diamond growth. This corresponds to Stage II manufacturing.

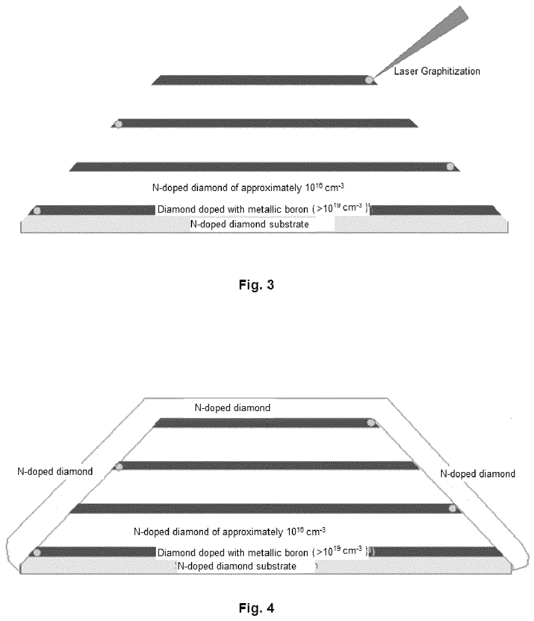

**Figure 3****:** Local laser graphitization to mark the position of the p++ diamond layer. The layer must be located using AFM equipment in conduction mode in the same experimental setup as the laser to obtain AFM images and laser graphitization simultaneously. This corresponds to Stage III of manufacturing.
**Figure 4****:** Diamond re-growth (n-type) to passivate the surface and prevent surface breakdown. The growth conditions must be modulated to allow the layer to grow on both surfaces (100) and (111). Thos corresponds to Stage IV of manufacturing.

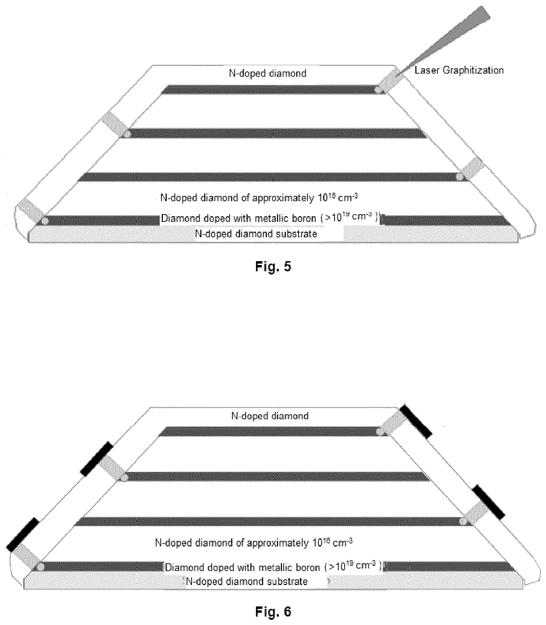

**Figure 5****:** Local laser graphitization to create contact through the n-doped passivation layer. This corresponds to Stage V of manufacturing.
**Figure 6****:** Metal contact deposition via electrolithography (Ti/Pt/Au) and subsequent PVD process. This corresponds to Stage V of manufacturing.

### PREFERRED EMBODIMENT OF THE INVENTION

A preferred embodiment of the objectof the invention is described below.

On a thin and suitably polished type I substrate of orientation (100), 40 p++/n+ bilayers are grown by MW PE CVD. Each bilayer is composed of a 50 nm thick highly boron-doped layer ([B]=10¹⁹ cm⁻³) and a 100 nm thick nitrogen-doped layer ([N]=10¹⁵ cm⁻³). Each layer must be grown in a different reactor to avoid cross-contamination.

The edges of the surface are then laser cut in a 111 orientation. This beveled top surface exhibits a larger cross-sectional area of the grown layers, making them easier to find by C-AFM, as well as increasing the spacing between contacts.

Once the different layers have been found by C-AFM, the p++ layers (those with metallic behavior) are marked by laser irradiation. Using for example a 535 nm and 0.5 NA laser, a graphitized column is drawn on each boron-doped layer.

The sample is reintroduced into the CVD reactor, where a new n-type layer ([N]=10¹⁶ cm⁻³) of 200 nm is grown to passivate the surface. This layer should therefore cover the entire surface, including the beveled faces 111. To promote growth along the 111 orientation, the growth shall be carried out with low percentage of methane.

On this beveled layer, the metallic contacts (Ti/Pt/Au) will be made using electrolithography followed by a PVD process. Prior to contact deposition, the area will be graphitized using a local laser. This graphitization is performed in the same location as the previous graphitized columns of the p++ layer, which are easy to find thanks to the translucent nature of the last layer.

Finally, the device shall be installed and electrically connected in a high-voltage resistant package similar to those used in high-power electronics.

## Claims

1. Diamond supercapacitor, composed of a layer of type I monocrystalline diamond, on which several bilayers of p-type and n-type diamond are arranged, doped with boron (10¹⁷ cm⁻³ < [B] < 10²³ cm⁻³) and with nitrogen ([N] ] > 10¹⁵ cm⁻³), which have a beveled outer surface, to facilitate vertical contact, increase its area and avoid the surface breakdown voltage, passivated by the growth of a layer of n-type diamond, on which the metallic contacts are located, coinciding with the location of the conductive diamond layers, p++.

2. Diamond supercapacitor, according to claim 1, **characterized in that** the beveled outer surface of the supercapacitor leaves the faces oriented in crystallographic direction 111.

3. Diamond supercapacitor, according to claim 1, **characterized in that** the charging voltage of the device is modulated by the thickness assigned to the n-layer.

4. Diamond supercapacitor manufacturing method, comprising the performance of the following steps on a Type I monocrystalline diamond substrate:
a) Homoepitaxy MPCVD growing of several p++/n+ bilayers, doped with boron (10¹⁷ cm⁻³ < [B]) and nitrogen ([N] > 10¹⁵ cm⁻³)
b) Beveling of the edges of the grown structure by laser cutting, chemical etching or any other technique, at an angle whose beveling plane corresponds to the crystallographic orientation (111),
c) On the beveled plane, marking the conductive diamond layers, p++, with laser, by means of local graphitization on the layer,
d) Growing an n-type diamond layer on top of the structure, including the (100) and (111) oriented surfaces, modulating lateral and vertical homoepitaxial growth,
e) Making the contacts through this n-doped layer again using local laser graphitization,
f) Placing and electrically connecting the device in a high voltage resistant package similar to that used in high power electronics.

5. Method for manufacturing the diamond supercapacitor, according to claim 5, **characterized in that** the location of the p++ layers to mark them with a laser (a dot) is carried out using an atomic force microscope (AFM) in conduction mode (C-AFM).
